# EUROPÄISCHE PATENTANMELDUNG

(11) **EP 4 631 615 A1**
(43) Veröffentlichungstag der Anmeldung: **15.10.2025**
(21) Anmeldenummer: 24217493.6
(22) Anmeldetag: 04.12.2024
(51) Int. Cl.: B01J 20/10, B01J 20/18, B01J 20/22, B01J 20/26, B01J 20/28, B01J 20/30, B01J 20/34, B01D 53/04, B01D 53/26

(54) **VERFAHREN ZUR HERSTELLUNG EINES SORBENTELEMENTS ZUR ABTRENNUNG VON EINEM GAS UND/ODER LUFTFEUCHTE AUS EINER FLUIDEN PHASE**

(30) Priorität: 15.12.2023 DE 102023135343
(71) Anmelder: VOLKSWAGEN AG, 38440 Wolfsburg (DE)
(72) Erfinder: ZLATKOV, Branislav, 38104 Braunschweig (DE); FAKIN, Toma, 2322 Majsperk (SI); HORVAT, Andrej, 2272 Gorisnica (SI); ZMAZEK, Marko, 2325 Kidricevo (SI)
(74) Vertreter: Gulde & Partner

(57) **Zusammenfassung**

Die Erfindung betrifft ein Verfahren zur Herstellung eines Sorbentelements (7) zur Abtrennung von einem Gas und/oder Luftfeuchte aus einer fluiden Phase. Das Verfahren umfasst ein Bereitstellen (S100) eines Sorbentmaterials zur Aufnahme von einem Sorptiv aus der fluiden Phase sowie ein Herstellen (S200) einer Mischung durch Zugabe des Sorbentmaterials und eines Bindermaterials und/oder eines Additivmaterials. Ferner erfolgt ein Vorbehandeln (S300) der Mischung aus dem Sorbentmaterial und dem Bindermaterial und/oder dem Additivmaterial mittels eines Mischers (12), wobei während des Vorbehandelns (S300) eine Vermischung und Homogenisierung der Mischung erfolgt. Anschließend erfolgt ein Extrudieren (S400) der vorbehandelten Mischung durch Herauspressen aus einer formgebenden Öffnung eines Formwerkzeugs (15) und Abformen (S400) der extrudierten Mischung zum einem Extrudat, wobei das Extrudat eine geometrische Ausdehnung in einer Raumrichtung von zumindest 500 mm aufweist. Nachfolgend wird das Extrudat mittels einer Aufnahmevorrichtung aufgenommen und das Extrudat ausgehärtet. Die Erfindung betrifft ferner ein mit einem solchen Verfahren hergestelltes Sorbentelement (7), eine Sorbenteinheit (70) umfassend eine Mehrzahl von solchen Sorbentelementen (7), sowie eine Anlage zur Abtrennung von einem Gas und/oder Luftfeuchte aus einer fluiden Phase, umfassend ein solches Sorbentelement (7) und/oder eine solche Sorbenteinheit (70).

## Beschreibung

Die Erfindung betrifft ein Verfahren zur Herstellung eines Sorbentelements zur Abtrennung von einem Gas und/oder Luftfeuchte aus einer fluiden Phase, ein mit einem solchen Verfahren hergestelltes Sorbentelement, eine Sorbenteinheit umfassend eine Mehrzahl von solchen Sorbentelementen, sowie eine Anlage zur Abtrennung von einem Gas und/oder Luftfeuchte aus einer fluiden Phase, umfassend ein solches Sorbentelement und/oder eine solche Sorbenteinheit.

Prinzipiell sind Anlagen und Verfahren zum Abscheiden von diversen Gasen, wie Sauerstoff, Stickstoff oder Kohlenstoffdioxid, aus der Umgebungsluft bekannt. Eine solche Abscheidung kann beispielsweise bei Kohlenstoffdioxid nach dem sogenannten Direct Air Capture-Verfahren, DAC-Verfahren, durchgeführt werden, wobei das Kohlenstoffdioxid unmittelbar aus der Umgebungsluft abgeschieden und einem weiteren Prozess zugeführt werden kann.

Zur Reduzierung der Kohlenstoffdioxidemissionen in der Umgebungsluft und zur Erreichung der Klimaneutralität müssen nicht nur die Kohlenstoffdioxidemissionen verringert werden, sondern auch nicht vermeidbare Kohlenstoffdioxidemissionen entsprechend kompensiert werden. Eine Möglichkeit, diese Kohlenstoffdioxidemissionen zu kompensieren, stellt ein Abscheiden von Kohlenstoffdioxid aus der Umgebungsluft dar. Diese DAC-Verfahren sind geeignet, den Anteil an Kohlenstoffdioxid in der Atmosphäre zu reduzieren. Alternativ oder zusätzlich lassen sich die Kohlenstoffdioxidemissionen kompensieren, indem Kohlenstoffdioxid dauerhaft in einem Speicher, insbesondere in einer Gesteinsschicht, eingelagert wird und somit nicht in die Atmosphäre gelangt.

Die meisten bekannten Verfahren zur Abtrennung von Kohlenstoffdioxid aus der Umgebungsluft arbeiten mit einem zyklischen Prozess unter Anwendung einer Kombination aus Druck und/oder Temperaturwechseln. Dabei wird in der Atmosphärenluft befindliches Kohlenstoffdioxid in einem ersten Prozessschritt in einem Sorbentelement, auch Sorptionselement genannt, gebunden. Das in dem Sorbentelement gebundene Kohlenstoffdioxid kann in einem zweiten Prozessschritt wieder freigesetzt werden.

Eine Herausforderung ist die Entwicklung von effizienten Adsorptionssystemen, bei denen die Sorbentelemente technisch so angeordnet und/oder ausgebildet sind, dass zum einen die Adsorption und Desorption von Kohlenstoffdioxid optimal abläuft und zum anderen ein vergleichsweise kostengünstiges Anlagenkonzept umgesetzt werden kann. Dabei beeinflussen insbesondere die Aufheiz- und Abkühlphasen die Prozesskosten, während die Ausgestaltung des Sorbentelements und des Prozessraumes die Anlagenkosten beeinflussen. Ein weiterer Nachteil der bekannten Lösungen ist es, dass die herangezogenen Sorbentmaterialien, insbesondere Physisorbenten, empfindlich auf Feuchtigkeit sind. Das heißt, dass der Sorbent in der Lage ist, auch die Restfeuchte aus der getrockneten Luft in die poröse Mikrostruktur aufzunehmen, was direkt zu einer Reduzierung der Aufnahmefähigkeit für Kohlenstoffdioxid aus der Umgebungsluft führt. Im praktischen Sinne würde es bedeuten, dass der Prozess ineffizienter wird, beziehungsweise eine viel geringere Ausbeute von Kohlenstoffdioxid bei gleichem Energieverbrauch im Abscheidungsprozess zur Folge hat. Diese Tatsache hat zur Folge, dass in den Prozess eine Regeneration des Sorbenten eingeführt werden müsste, um die Feuchtigkeit aus dem Sorbenten zu entfernen. Dies würde die energetische Bilanz des Prozesses weiter verschlechtern. Nach dem Stand der Technik wird das Sorbentmaterial hauptsächlich über Wärmetauscher auf die gewünschte Temperatur temperiert. Die konventionell bekannten Sorbentmaterialien haben eine sehr schlechte Wärmeleitfähigkeit, was sich auf die gesamte Betrachtung der Energiekosten besonders während der Desorption negativ auswirkt.

Sorbentelemente werden üblicherweise in Form von Granulat oder Pellets eingesetzt, die mit bekannten Verfahren hergestellt und in Form von Schüttung eingesetzt werden.

Aus dem Stand der Technik sind Verfahren bekannt, die das Extrudieren von Keramik oder Kunststoff oder Compound beschreiben.

DE 10 2016 104 387 B4 betrifft eine Extrusionsvorrichtung und ein Verfahren zum Extrudieren einseitig verschlossener keramischer Hohlkörper, wie sie gattungsgemäß aus der DE 27 15 852 A1 bekannt sind.

GB 440 949 A beschreibt eine Vorrichtung zum Extrudieren von dünnwandigen Keramikrohren mit Wanddicken von wenigen 100 µm und Längen von 0,5 m bis 1 m.

DE 501 270 C beschreibt eine Vorrichtung, mit der einseitig geschlossene Hohlkörper durch Extrudieren hergestellt werden können

In EP 1 075 916 A2 ist ein Verfahren zur Herstellung eines Bodens an einem Keramikrohr durch Extrudieren beschrieben.

Aus JP H03-187 710 A ist ein Verfahren und eine Vorrichtung zum Extrudieren von Keramikhohlzylindern bekannt, die mindestens einen an einer der Stirnseiten des Zylinders mit einem Boden geschlossenen Hohlraum aufweisen.

In EP 1 552 913 A1 ist ein Verfahren zur Herstellung eines keramischen Hohlkörpers aufgezeigt. Der Hohlkörper wird durch Gießen einer flüssigen keramischen Masse in einer Gießform hergestellt.

EP 3 858 462 A1 und EP 3 318 321 A1 beschreiben ein Adsorbens in Form von Granulat als Schüttungen.

DE 10 2008 046 155 B4 beschreibt ein Verfahren zur Herstellung eines Adsorptionsmittelgranulats für Molekularsiebe auf der Basis von Zeolith.

WO 2024 / 060 246 A1 beschreibt ein Verfahren zur Herstellung kompakter zeolithischer Formkörper, wobei ein formbares Gemisch, umfassend Zeolith und eine oder mehrere Zeolith-Vorläufer-Komponenten und gegebenenfalls Wasser und gegebenenfalls ein oder mehrere organische Zusatzstoffe, zu Formkörpern verarbeitet wird. Die so erhaltenen Formkörper werden einer thermischen Behandlung unterzogen und die thermisch behandelten Formkörper werden gewässert, gealtert und mit einer weiteren Komponente in Kontakt gebracht, aus der in Kombination mit den Zeolith-Vorläufer-Komponenten Zeolith herstellbar ist und Bedingungen ausgesetzt werden, unter denen sich aus der weiteren Komponente und den Zeolith-Vorläufer-Komponenten Zeolith bildet.

WO 2010 / 106 133 A1 beschreibt ein metallorganisches Gerüstmaterial in pulverförmiger beziehungsweise kristalliner Form. Dieses kann als solches als Sorptionsmittel alleine oder zusammen mit anderen Sorbenten oder weiteren Materialien eingesetzt werden. Vorzugsweise geschieht dies als Schüttgut. Weiterhin kann das metallorganische Gerüstmaterial in einen Formkörper umgewandelt werden. Bevorzugte Verfahren sind hierbei die Verstrangung oder Tablettierung.

DE 10 2005 032 345 B4 beschreibt Formkörper als Adsorptionsmittel, wobei der Formkörper eine Kanalstruktur mit Kanälen aufweist.

DE 198 26 209 A1 beschreibt einen Formkörper, erhalten aus einer Reaktionsmischung, umfassend Zeolith, Plastifiziermittel und Bindemittel, wobei der Formkörper insbesondere wabenförmig ist.

US 11,779,903 B2 beschreibt geformte Wasseradsorber-Verbundkörper, die vorzugsweise mit Abmessungen konfiguriert sind, die für die Verwendung in einem Festbettadsorptionssystem geeignet sind, in dem eine Vielzahl der Formkörper mit einer hohen Packungsdichte vorgesehen sind.

DE 20 2009 016 308 U1 beschreibt eine Vorrichtung zur Filterung eines Inhaltsstoffes aus einem Gasstrom, mit einem Adsorptionsbereich, in den der Gasstrom eingeleitet werden kann und einem Desorptionsbereich.

Üblicherweise wird ein Sorbent in Form von Granulat oder Pellets bei Adsorptions- und Desorptionsvorgängen eingesetzt. Um den Prozess optimal gestalten zu können, ist ein hoher Energieeinsatz notwendig.

Der Erfindung liegt nun die Aufgabe zugrunde, ein Verfahren zur Herstellung eines Sorbentelements zur Abtrennung von einem Gas und/oder Luftfeuchte aus einer fluiden Phase bereitzustellen, das die aus dem Stand der Technik bekannten Nachteile zumindest überwindet.

Die Aufgaben werden ganz oder zumindest teilweise durch ein Verfahren zur Herstellung eines Sorbentelements zur Abtrennung von einem Gas und/oder Luftfeuchte aus einer fluiden Phase durch ein mit einem solchen Verfahren hergestelltes Sorbentelement, durch eine Sorbenteinheit umfassend eine Mehrzahl von solchen Sorbentelementen, sowie durch eine Anlage zur Abtrennung von einem Gas und/oder Luftfeuchte aus einer fluiden Phase, umfassend ein solches Sorbentelement und/oder eine solche Sorbenteinheit mit den Merkmalen des unabhängigen Anspruchs, gelöst. Weitere bevorzugte Ausgestaltungen der Erfindung ergeben sich aus den übrigen, in den Unteransprüchen genannten Merkmalen.

Erfindungsgemäß wird ein Verfahren zur Herstellung eines Sorbentelements zur Abtrennung von einem Gas und/oder Luftfeuchte aus einer fluiden Phase bereitgestellt. Das Verfahren umfasst ein Bereitstellen eines Sorbentmaterials zur Aufnahme von einem Sorptiv aus der fluiden Phase sowie ein Herstellen einer Mischung durch Zugabe des Sorbentmaterials und eines Bindermaterials und/oder eines Additivmaterials. Ferner erfolgt ein Vorbehandeln der Mischung aus dem Sorbentmaterial und dem Bindermaterial und/oder dem Additivmaterial mittels eines Mischers, wobei während des Vorbehandelns eine Vermischung und Homogenisierung der Mischung erfolgt. Anschließend erfolgt ein Extrudieren der vorbehandelten Mischung durch Herauspressen aus einer formgebenden Öffnung eines Formwerkzeugs und Abformen der extrudierten Mischung zu einem Extrudat, wobei das Extrudat eine geometrische Ausdehnung in einer Raumrichtung von zumindest 500 mm aufweist. Nachfolgend wird das Extrudat mittels einer Aufnahmevorrichtung aufgenommen und das Extrudat ausgehärtet.

Unter einem Sorbentmaterial ist in diesem Zusammenhang ein Material zu verstehen, welches dazu geeignet ist, durch chemische oder physische Prozesse ein zu adsorbierendes Gas, insbesondere Kohlenstoffdioxid, reversibel an sich zu binden und nachfolgend wieder freizusetzen oder einen Luftstrom von Umgebungsluft zu trocknen.

Das Bereitstellen des Sorbentmaterials zur Aufnahme von dem Sorptiv aus der fluiden Phase sowie das Herstellen der Mischung durch Zugabe des Sorbentmaterials und des Bindermaterials und/oder des Additivmaterials erfolgt vorzugsweise mittels einer Materialaufnahmevorrichtung. Entweder wird die erzeugte Mischung, die bereits sämtliche Bestandteile wie das Sorbentmaterial und das Bindermaterial und/oder das Additivmaterial umfasst, mittels der Materialaufnahmevorrichtung bereitgestellt und zu dem Mischer überführt, oder es werden die genannten Bestandteile der Mischung nacheinander zugegeben, um die Mischung herzustellen. Demnach wird vorzugsweise zunächst das Sorbentmaterial und anschließend das Bindermaterial und/oder das Additivmaterial zugegeben.

Zudem erfolgt das Vorbehandeln der Mischung mittels des Mischers bis die Mischung geeignet für das Extrudieren ist. Während der Vorbehandlung werden die Komponenten gemäß den Rezepturen, die die Anteile des Sorbentmaterials und des Bindermaterials und/oder des Additivmaterials beinhalten, unter anderem gemischt. Hierbei wird die Mischung ausreichend homogenisiert. Es erfolgt außerdem eine Dispergierung, sodass eine Gleichverteilung von Sorbentmaterial und Bindermaterial und/oder Additivmaterial erfolgt. Hierbei erfolgt ein Energieeintragen in die Mischung. Jedes der Verfahren beziehungsweise des verwendeten Mischers hierfür hat seine eigene Charakteristik bezüglich des Energieeintrages und der Homogenisierungswirkung für die jeweilige Mischung. Bei der Hochskalierung des Prozesses ist der spezifische Energieeintrag je Volumenanteil die entscheidende Größe.

Nach der Vorbehandlung, wird der Prozess vorzugsweise unter Verwendung einer Steuerungs- und Regelungseinheit parametrisiert und ein Antrieb zur Extrusion betrieben. Hierdurch erfolgt das kontrollierte Extrudieren, das heißt, die vorbehandelte Mischung wird durch die formgebende Öffnung des Formwerkzeugs gedrückt. Durch Kraftwirkung wird das Extrudat zu dem Sorbentelement abgeformt, wobei das Extrudat die geometrische Ausdehnung in der Raumrichtung von zumindest 500 mm aufweist. Optional erfolgt eine Verkleinerung des Sorbentelements, indem es beispielsweise durch Schneiden in einzelne Sorbentelementbestandteile mit einer geometrische Ausdehnung von mindestens 5 mm überführt wird. Die Form des Sorbentelementes ist durch das Formwerkzeug vorgegeben und kann dementsprechend sehr unterschiedlich gestaltet werden.

Anschließend nimmt die Aufnahmevorrichtung das abgeformte Extrudat auf und hält es solange, bis der Vorgang abgeschlossen ist.

Das abgeformte Extrudat stellt dann das Sorbentelement dar, das im Nachgang entsprechend zu einem Ofen verbracht werden kann, wo dann abhängig von den Komponenten des Sorbentelements eine weitere Nachbehandlung wie zum Beispiel ein Kalzinieren oder eine entsprechende Wärmebehandlung beziehungsweise thermische Behandlung durchgeführt wird.

Mit dem erfindungsgemäßen Verfahren zur Herstellung des Sorbentelements können grundsätzlich für die Adsorption beziehungsweise Desorption von diversen Gasen, wie zum Beispiel Kohlenstoffmonoxid (CO), Kohlenstoffdioxid (CO₂), Methan (CH₄) oder Wasser (H₂O), geeignete Sorbentelemente hergestellt werden. Der Einsatz beschränkt sich demnach nicht auf Sorbentelemente zur Anwendung im Rahmen der DAC-Technologie, sondern ist auch geeignet für andere Anwendungen und Applikationen in technischen Bereichen, wo eine Gastrennung, Gasseparation, Gasreinigung, Gasentfeuchtung und ähnliches durchgeführt wird.

Das erfindungsgemäß hergestellte Sorbentelement vermeidet im Vergleich zum Einsatz von Granulat oder Pellets, die in Form von Schüttungen in den entsprechenden Anlagen eingesetzt werden, dass in gewissen Bereichen der Anlagen unerwünschte Leerräume entstehen. Die Packungsdichte von Schüttungen, die insbesondere zu unregelmäßigen Anordnungen führen kann, wird ebenfalls vermieden. Beide Effekte bedingen das Risiko einer erhöhten Bypasswirkung und demzufolge schnellerer Durchbrüche bei der Adsorption. Zudem entstehen hohe Druckverluste. Durch das erfindungsgemäß hergestellte Sorbentelement wird dies vermieden. Es weist solche Abmessungen auf, dass das Sorbentelement kontrolliert und strukturiert in entsprechenden Anlagen eingesetzt und angeordnet werden kann. Es werden homogene Strukturen sichergestellt, wodurch eine verbesserte Raumausfüllung und ein möglichst geringer Strömungswiderstand realisiert wird. Mit Hilfe des Verfahrens wird eine Möglichkeit geschaffen, solche Sorbentelement zielgerichtet herzustellen, wobei durch Auswahl des geeigneten Formwerkzeugs eine Anpassung einfach und effektiv vorgenommen wird.

Demzufolge wird eine Kontrolle über Freiheitsgrade während des Aufheizens in Bezug auf Volumenänderungen erzielt. Die erfindungsgemäß hergestellten Sorbentelemente können zielgerichtet in der Anlage in Reihe eingebaut werden und damit können kontrollierte Freiheitsgrade erreicht werden. Eine anwendungsfallbezogene Auslegung der Anlage wird hierdurch sichergestellt.

Insbesondere für große Anlagen stellt dies eine besonders kosteneffiziente Möglichkeit zur Herstellung von Sorbentelementen dar.

In bevorzugter Ausgestaltung der Erfindung ist vorgesehen, dass die geometrische Ausdehnung zumindest 1000 mm, bevorzugt 1200 mm und besonders bevorzugt 1500 mm beträgt.

Gemäß einer weiteren bevorzugten Ausgestaltung der Erfindung ist der Mischer ein Doppel-Schnecken-Extruder oder ein kontinuierlicher Kneter und die Vermischung und Homogenisierung werden in dem Doppel-Schnecken-Extruder oder in dem kontinuierlichen Kneter kombiniert. Zugleich stellt der Mischer dann den Antrieb für den Schritt der Extrusion dar. Vorzugsweise ist das Verfahren ein kontinuierlicher Prozess. Dieser umfasst die Schritte der Vermischung und Homogenisierung und vorzugsweise Zerkleinerung. Durchgeführt werden diese Schritte in dem Mischer. Der Einsatz eines Doppel-Schnecken-Extruders ist eine vorteilhafte Prozessvariante zur Vorbehandlung, weil sie entlang der Schnecke die größtmögliche Flexibilität für einzelne Zonen ermöglicht. In den Zonen erfolgt eine Aktivierung durch Scherung, gegebenenfalls leicht erhöhte Temperatur und ermöglicht dadurch eine optimierte Erzeugung einer extrudierfähigen Mischung.

In bevorzugter Ausgestaltung der Erfindung ist vorgesehen, dass die Gesamtmenge des Sorbentmaterials im Bereich von 15 bis 65 Gew.-%, bezogen auf das Gesamtgewicht der Mischung, insbesondere im Bereich von 17 bis 60 Gew.-% und vorzugsweise im Bereich von 20 bis 57 Gew.-% liegt. Hierdurch wird eine Mischung hergestellt, die nach der Vorbehandlung für die Extrusion geeignete Eigenschaften aufweist, wobei gleichzeitig geforderte Adsorptions- und Desorptionseigenschaften sichergestellt werden.

Gemäß einer weiteren bevorzugten Ausgestaltung der Erfindung umfasst das Sorbentmaterial ein Zeolith, vorzugsweis ein kristallines Alumosilikat, ein Ionenaustauscher-Harz, Silica Gel und/oder ein metallorganisches Gerüst, MOF. Gemäß einer besonders bevorzugten Ausgestaltung des Sorbentelements ist das Sorbentmaterial ein Physisorbent, insbesondere ein Zeolith. Physisorbenten sind besonders effizient, um Kohlenstoffdioxid aus einem trockenen Luftstrom mit einer Restfeuchte von weniger als 5 % aufzunehmen. Bei einer höheren Luftfeuchte wird zusätzlich die Luftfeuchte durch das Sorbentmaterial aufgenommen, wodurch die Aufnahmekapazität für Kohlenstoffdioxid herabgesetzt wird.

In einer alternativen Ausgestaltung des Sorbentelements kann das Sorbentmaterial auch ein Chemisorbent sein. Chemisorbenten sind ebenfalls geeignet, um Kohlenstoffdioxid aus der Umgebungsluft zu adsorbieren und nachfolgend in einem Desorptionsprozess wieder abzugeben.

Vorzugsweise liegt die Gesamtmenge des Bindermaterials im Bereich von 1 bis 30 Gew.-%, bezogen auf das Gesamtgewicht der Mischung, insbesondere im Bereich von 2 bis 25 Gew.-% und vorzugsweise im Bereich von 3 bis 20 Gew.-%.

In bevorzugter Ausgestaltung der Erfindung umfasst das Bindermaterial ein Material auf Tonbasis, vorzugsweise Kaolin, Bentonit und/oder Attapulgit, ein Kohlenhydrat, Polyvinylalkohol, PVA, Polyvinylbutyral, PVB, Kieselerde und/oder Aluminiumoxid. Diese Bestandteile lassen sich vorteilhaft miteinander kombinieren, wodurch in der Praxis unterschiedliche technische Anforderungen erfüllt werden können.

In weiterer bevorzugter Ausgestaltung der Erfindung umfasst das Herstellen der Mischung und/oder das Vorbehandeln der Mischung eine Zugabe eines Netzmittels, vorzugsweise Wasser. Bevorzugt erfolgt die Zugabe nach einem Vermischen des Sorbentmaterials und des Bindermaterials zu einer homogenen Mischung. Hierdurch wird der Verfahrensablauf begünstigt und vereinfacht. Es erfolgt eine Reduzierung von störender Agglomeratbildung, die sich nachteilig unter anderem auf die Extrusion auswirkt.

Vorzugsweise liegt die Gesamtmenge des Netzmittels im Bereich von 5 bis 40 Gew.-%, bezogen auf das Gesamtgewicht der Mischung. Hierdurch lässt sich die Mischung einfach extrudieren und wie gewünscht abformen. Besonders bevorzugt liegt dabei eine Mischung aus Sorbentmaterial und Bindermaterial im Bereich von 60 bis 95 Gew.-%, bezogen auf das Gesamtgewicht der Mischung. Diese Bestandteile lassen sich vorteilhaft miteinander kombinieren, wodurch in der Praxis unterschiedliche technische Anforderungen erfüllt werden können.

In bevorzugter Ausgestaltung der Erfindung ist vorgesehen, dass das Additivmaterial einen technischen Zusatzstoff, einen Haftvermittler, ein Gleitmittel und/oder einen Porenbildner umfasst. Hierdurch können gewünschte Eigenschaften des hergestellten Sorbentelements wie gefordert modelliert und gestaltet werden, sodass das Sorbentelement für den entsprechenden Anwendungsbereich optimiert ausgelegt wird.

Vorzugsweise liegt das Additivmaterial im Bereich von 0,1 bis 5 Gew.-%, bezogen auf das Gesamtgewicht der Mischung.

Gemäß einer weiteren bevorzugten Ausgestaltung der Erfindung ist ein Querschnitt der abgeformten Mischung kreisförmig, kreisringförmig, dreieckig, rechteckig, hexaederförmig oder oktaederförmig. Der Querschnitt verläuft vorzugsweise senkrecht zur geometrischen Ausdehnung. Durch den Einsatz einer entsprechend ausgebildeten formgebenden Öffnung des Formwerkzeugs wird die Form des Sorbentelements variabel gestaltet. Aufgrund unterschiedlicher Anwendungen treten in den Anlagen, innerhalb derer die Sorbentelemente eingesetzt werden, unterschiedliche strömungstechnische und thermodynamische Verhältnisse auf. Entsprechend wird durch den Querschnitt darauf Rücksicht genommen, sodass ein Sorbentelement hergestellt wird, das insbesondere in Kombination mit weiteren Sorbentelementen für eine Trennungsanlage angepasst wird. Demnach werden die Strömungsbedingungen optimiert, es werden ungleichmäßige freiliegende Bereiche vermieden beziehungsweise auf der anderen Seite dichte Bereiche vermieden, sodass durch die Sorbentelemente eine gleichmäßige Befüllung solcher Anlagen und dadurch Vermeidung dieser Effekte möglich ist.

Im Fall eines kreisförmigen Querschnitts stellt das Sorbentelement demzufolge einen Zylinder dar. Vorzugsweise weist das Sorbentelement dann einen Durchmesser von 3 bis 100 mm auf. Bei anderen Querschnitten weist das Sorbentelement einen hydraulischen Durchmesser in dieser Größenordnung auf. Im Fall eines kreisringförmigen Querschnitts stellt das Sorbentelement demzufolge einen Hohlzylinder dar. Vorzugsweise weist das Sorbentelement dann einen Außendurchmesser von 3 bis 100 mm und einen Innendurchmesser von 0,3 bis 10 mm auf.

Vorzugsweise ist die Öffnung des Formwerkzeugs derart ausgebildet, dass die extrudierte Mischung eine Aufnahme, vorzugsweise einen Hohlraum, für ein Heizelement umfasst. Hierdurch stellt das Verfahren ein Sorbentelement bereit, das mit einem Heizelement ausgestattet werden kann, sodass eine effektive Beheizung des Sorbentelements ermöglicht wird. Dies stellt zudem eine platzsparende Möglichkeit zur Beheizung dar, da auf zusätzliche raumbeanspruchende Heizelemente verzichtet werden kann. Optional erfolgt eine Verkleinerung des Sorbentelements, indem es beispielsweise durch Schneiden in einzelne Sorbentelementbestandteile mit einer geometrischen Ausdehnung von mindestens 5 mm überführt wird. Jedes dieser Sorbentelementbestandteile umfasst dann ebenfalls einen eigenen Hohlraum. Eine Vielzahl dieser Sorbentelementbestandteile wird in einem weiteren bevorzugten Verfahrensschritt auf einem Heizelement, vorzugsweise einem elektrischen Heizdraht, angeordnet also mit anderen Worten aufgefädelt. Mit anderen Worten liegt dann eine Kette vor, umfassend ein Heizelement und eine Vielzahl von von dem Heizelement mittels des Hohlraums getragene Sorbentelementbestandteile.

In weiterer bevorzugter Ausgestaltung der Erfindung ist vorgesehen, dass das Extrudieren der vorbehandelten Mischung ferner ein gleichzeitiges Zuführen eines Heizelements zu der formgebenden Öffnung des Formwerkzeugs umfasst, sodass eine Ummantelung des Heizelements durch das Extrudat erfolgt. Vorzugsweise wird in diesem Fall ein Zusatzhandling oder eine Zuführvorrichtung vorgesehen, die im Formwerkzeug das Heizelement, vorzugsweise ein Heizdraht oder Heizrohr, zuführt, wobei während des Extrudierens eine Ummantelung des Heizelements mittels der extrudierten Mischung stattfindet. Das Heizelement ist vorzugsweise ein elektrisch beheizbares Heizelement. Durch das Verfahren werden auf effektive und flexible Weise Sorbentelemente hergestellt, die ein besonders energieeffizientes Aufheizen des Sorbentmaterials ermöglichen, da nicht eine komplette Schüttung an Granulat oder Pellets aufgeheizt wird, sondern das Sorbentmaterial direkt mit dem leicht erhitzbaren Heizelement in Kontakt steht. Bei Granulat erfolgt die Temperierung zum Beispiel über Wärmetauscherlamellen, was in langsamen Aufheizvorgängen resultiert. Durch das erfindungsgemäße Sorbentelement wird die Länge und Anzahl der Wärmeübergänge reduziert, wodurch die Verluste verringert werden und die Energieeffizienz gesteigert wird. Ferner ist eine besonders kompakte Ausführung des Sorbentelements möglich, indem das Heizelement durch einen entsprechenden Anschluss bestromt werden kann und sich durch den elektrischen Widerstand beim Durchströmen des Trägers aufheizt. Darüber hinaus ist ein schnelleres Aufheizen und schnelleres Abkühlen möglich, wodurch kürzere Zykluszeiten erreicht werden, was erhebliche Kostenvorteile mit sich bringt. Darüber hinaus werden zusätzliche Arbeitsschritte vermieden, bei denen das Sorbentelement mit einem Heizelement versehen wird.

Vorzugsweise ist die Öffnung des Formwerkzeugs derart ausgebildet, dass das Extrudat eine Mehrzahl von entlang eines Umfangs des Extrudats angeordneten Vorsprüngen umfasst, wobei zwischen benachbarten Vorsprüngen ein Zwischenraum angeordnet ist. Vorzugsweise ist die Form der Vorsprünge und demzufolge die Form der Zwischenräume so ausgebildet, dass die Vorsprünge eines ersten Sorbentelements und die Zwischenräume eines baugleichen zweiten Sorbentelements miteinander korrespondieren, sodass sich die Vorsprünge des einen Sorbentelements in die Zwischenräume des anderen Sorbentelements einführen lassen und vorzugsweise eine formschlüssige Verbindung ausbilden. Dadurch werden höhere Packungsdichten in einer Anlage erreicht.

Vorzugsweise ist die Öffnung des Formwerkzeugs derart ausgebildet, dass das Extrudat eine Mehrzahl von entlang eines Umfangs des Extrudats angeordneten Vorsprüngen umfasst, wobei zwischen benachbarten Vorsprüngen ein Zwischenraum zur Aufnahme eines Heizelements angeordnet ist. Die Vorsprünge erstrecken sich vorzugsweise durchgehend entlang der gesamten geometrischen Ausdehnung des Sorbentelements. Der Zwischenraum ist vorzugsweise ausgebildet, dass er eine relative Bewegung eines aufgenommenen Heizelements nur in Richtung entlang der geometrischen Ausdehnung zulässt. Hierdurch wird eine zusätzliche Befestigung des Heizelements vermieden, da das Heizelement durch ein Ineinandergreifen von Vorsprung und Zwischenraum gehalten wird. Beispielsweise ist eine Montage durch Einschieben des Heizelements entlang der geometrischen Ausdehnung in den Zwischenraum möglich, sodass das Heizelement in einfacher Weise mit dem Heizelement ausgestattet werden kann.

Ein zweiter Aspekt der Erfindung betrifft ein mit dem erfindungsgemäßen Verfahren hergestelltes Sorbentelement. Die im Zusammenhang mit dem Verfahren beschriebenen Merkmale und Vorteile können in analoger Weise mit dem Sorbentelement kombiniert und deren Vorteile erzielt werden.

Ein dritter Aspekt der Erfindung betrifft eine Sorbenteinheit umfassend eine Mehrzahl von mit dem erfindungsgemäßen Verfahren hergestellten Sorbentelementen, wobei jedes der Mehrzahl von Sorbentelemente ein elektrisches Heizelement umfasst, wobei die Heizelemente der Sorbentelemente parallel und/oder seriell elektrisch verschaltet sind. Hierdurch ist es möglich jedes der Mehrzahl von Sorbentelementen selektiv zu beheizen, wodurch eine sehr gezieltes Beheizen ermöglicht wird. Die Sorbentelemente werden in Abhängigkeit der Anwendung entsprechend in Betrieb genommen und in Abhängigkeit davon, wie und wann eine Trocknung, Adsorption oder Desorption erfolgen soll, verwendet, indem sie jeweils selektiv beheizt werden. Hierdurch ist es beispielsweise möglich, zunächst eine Beheizung eines ersten Bereichs eines Prozessraums durchzuführen, die dann auf einen zweiten Bereich ausgedehnt wird. Dadurch ist es möglich, die Sorbentelemente beliebig anzusteuern oder über in den Sorbentelementen integrierte Temperatursensoren über eine Temperaturregelung oder über eine Stromstärkeregulierung das gewünschte Sorbentelemente auf die gewünschte Temperatur aufzuheizen und damit eine optimale Prozessführung zu ermöglichen.

Ein vierter Aspekt der Erfindung betrifft eine Anlage zur Abtrennung von einem Gas und/oder Luftfeuchte aus einer fluiden Phase, umfassend einen Strömungserzeuger zur Förderung der fluiden Phase durch die Anlage, einen ersten Prozessraum zur Trocknung der fluiden Phase, und einen dem ersten Prozessraum in Strömungsrichtung nachgeschalteten zweiten Prozessraum zur Abtrennung eines Gases, vorzugsweise Kohlenstoffdioxid, aus der im ersten Prozessraum getrockneten fluiden Phase, wobei zumindest in einem der beiden Prozessräume ein mit dem erfindungsgemäßen Verfahren hergestelltes Sorbentelement und/oder eine erfindungsgemäße Sorbenteinheit angeordnet ist.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung einer Vorrichtung zur Durchführung eines erfindungsgemäßen Verfahrens zur Herstellung eines Sorbentelements,
- Figur 2a: eine schematische Darstellung einer Anlage zur Abtrennung von einem Gas und/oder Luftfeuchte aus einer fluiden Phase gemäß einer ersten Ausführung der Erfindung,

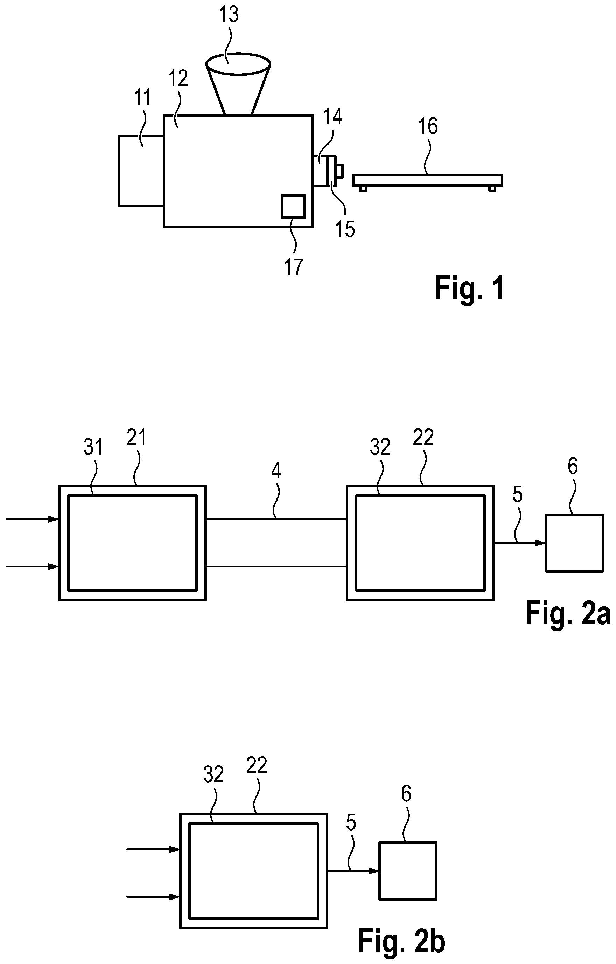

- Figur 2a: eine schematische Darstellung einer Anlage zur Abtrennung von einem Gas und/oder Luftfeuchte aus einer fluiden Phase gemäß einer zweiten Ausführung der Erfindung,

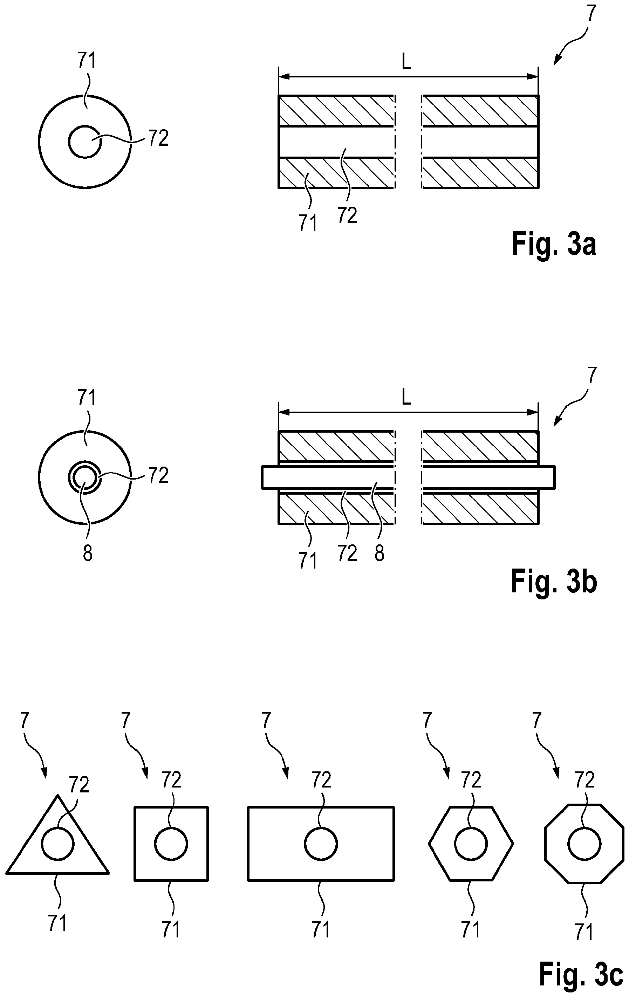

- Figur 3a: ein mit dem erfindungsgemäßen Verfahren hergestelltes Sorbentelement gemäß einer ersten Ausführung der Erfindung,
- Figur 3b: das Sorbentelement aus Figur 3a mit einem Heizelement,
- Figur 3c: unterschiedliche Querschnitte von mit dem erfindungsgemäßen Verfahren hergestellten Sorbentelementen,

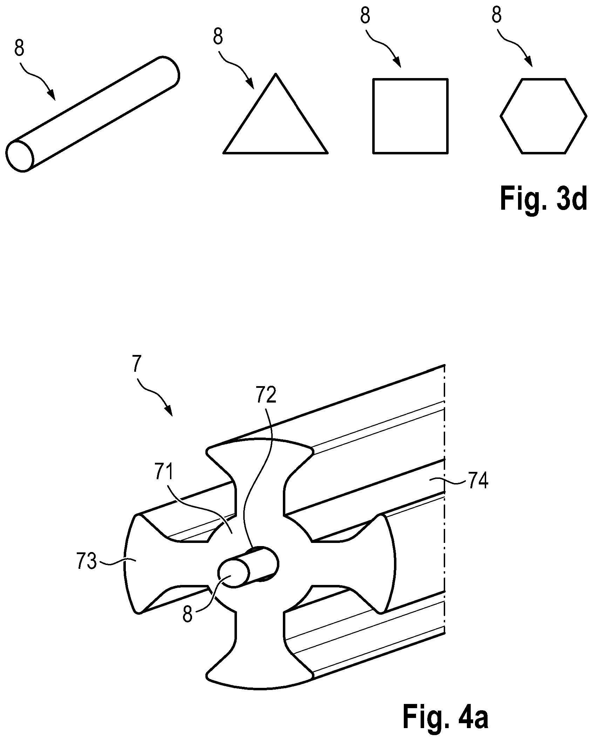

- Figur 3d: unterschiedliche Querschnitte von Heizelementen zur Ummantelung durch ein Extrudat,
- Figuren 4a - 4c: weitere mit dem erfindungsgemäßen Verfahren hergestellte Sorbentelemente gemäß weiterer Ausführungen der Erfindung,

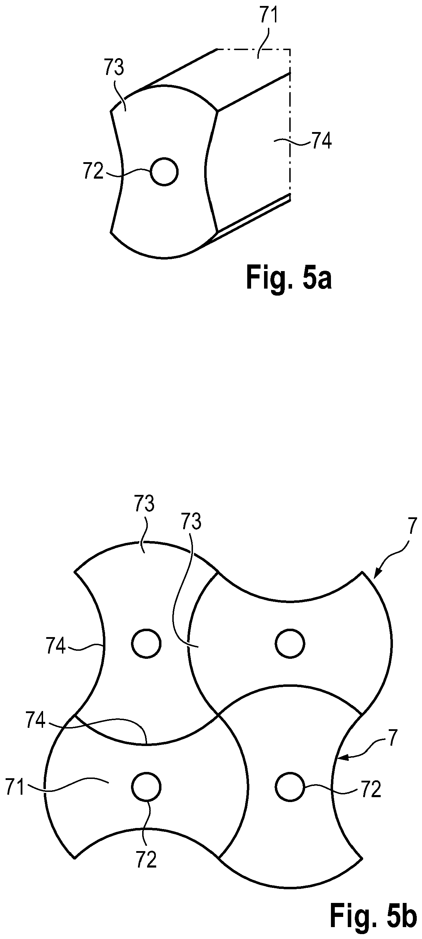

- Figur 5a: ein mit dem erfindungsgemäßen Verfahren hergestelltes Sorbentelement gemäß einer zweiten Ausführung der Erfindung,
- Figur 5b: ein Zusammenbau einer Mehrzahl von Sorbentelementen aus Figur 5a,

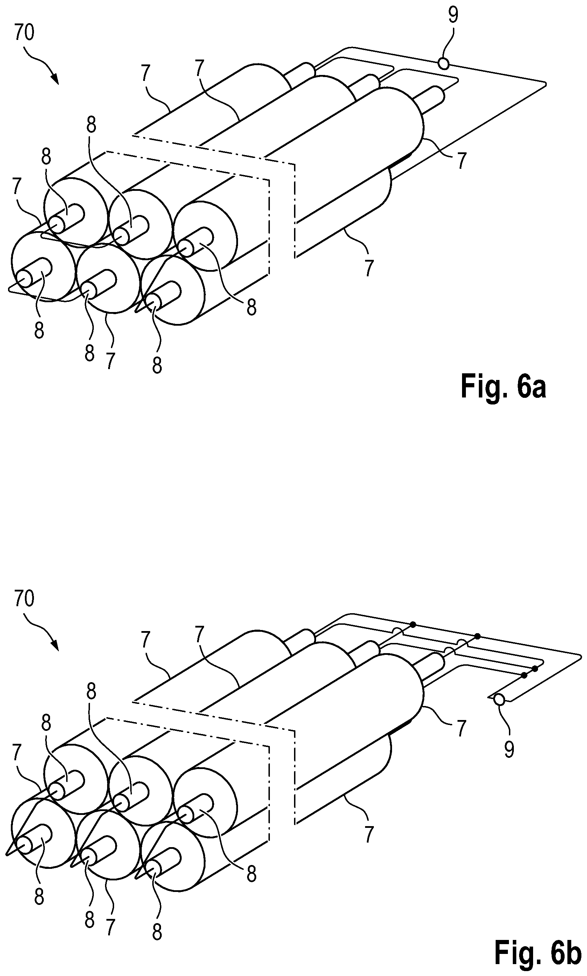

- Figur 6a: eine Sorbenteinheit umfassend eine Mehrzahl von mit dem erfindungsgemäßen Verfahren hergestellten Sorbentelementen in serieller elektrischer Verschaltung,
- Figur 6b: eine Sorbenteinheit umfassend eine Mehrzahl von mit dem erfindungsgemäßen Verfahren hergestellten Sorbentelementen in serieller und paralleler elektrischer Verschaltung,

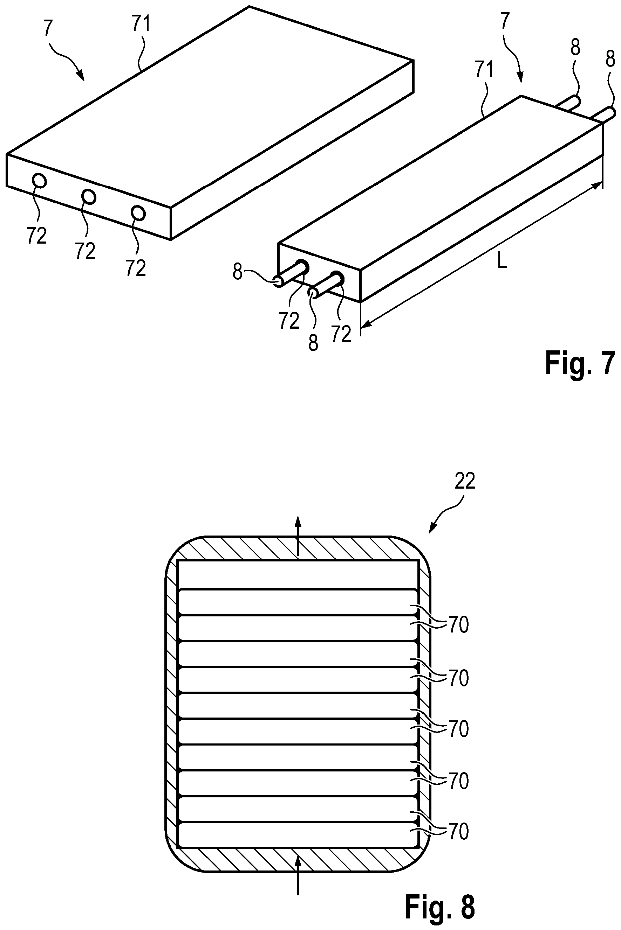

- Figur 7: ein mit dem erfindungsgemäßen Verfahren hergestelltes Sorbentelement gemäß einer dritten Ausführung der Erfindung,
- Figur 8: einen Prozessraum umfassend eine Mehrzahl erfindungsgemäßer Sorbenteinheiten,

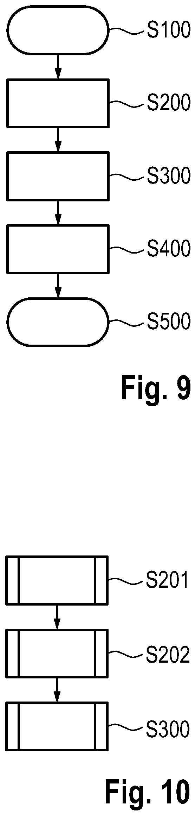

- Figur 9: eine schematische Darstellung eines erfindungsgemäßen Verfahrens,
- Figur 10: eine schematische Darstellung der Schritte des Herstellens einer Mischung und des Vorbehandelns der Mischung,

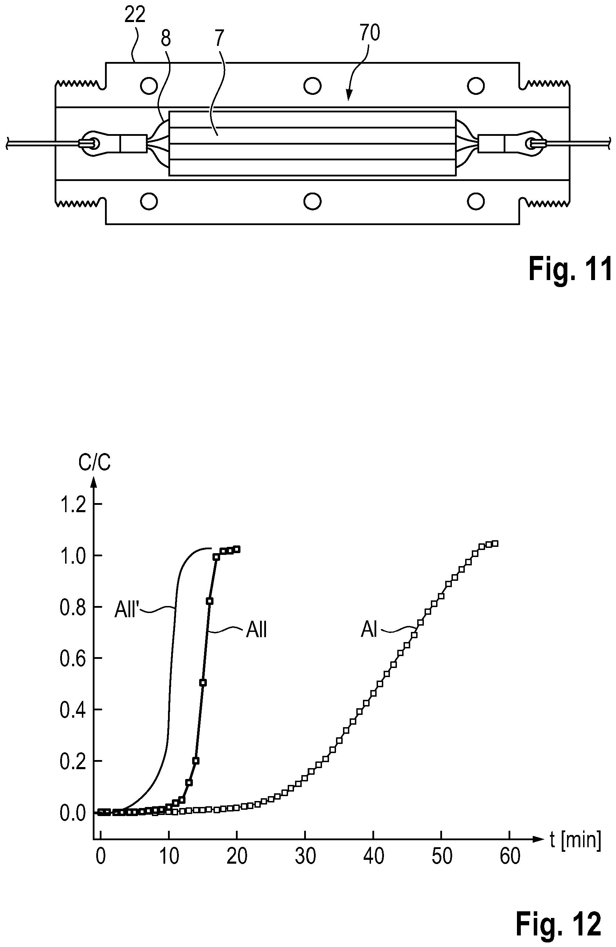

- Figur 11: Versuchsanlage zur Abtrennung von einem Gas und/oder Luftfeuchte aus einer fluiden Phase gemäß einem Beispiel, und
- Figur 12: Durchbruchskurven während einer Adsorption gemäß dem Bespiel und gemäß dem Stand der Technik.

Figur 1 zeigt eine schematische Darstellung einer Vorrichtung zur Durchführung eines erfindungsgemäßen Verfahrens zur Herstellung eines Sorbentelements 7. Die Vorrichtung umfasst einen Antrieb 11, einen Mischer 12, eine Materialaufnahmevorrichtung 13, eine Extrusionsvorrichtung 14, in der ein Formwerkzeug 15 angeordnet ist, eine Aufnahmevorrichtung 16 für ein Extrudat und ein Steuerungs- und Regelungseinheit 17.

Figur 2a zeigt eine schematische Darstellung einer Anlage zur Abtrennung von einem Gas und/oder Luftfeuchte aus einer fluiden Phase gemäß einer ersten Ausführung der Erfindung. Die Anlage umfasst einen nicht dargestellten Strömungserzeuger zur Förderung der fluiden Phase durch die Anlage. Dargestellt ist ein Aufbau umfassend eine Trocknungskammer 21 als ein erster Prozessraum 21 zur Trocknung der fluiden Phase und eine dem ersten Prozessraum 21 in Strömungsrichtung nachgeschaltete Sorptionskammer 22 als zweiter Prozessraum 22 zur Abtrennung eines Gases. Mittels der Trocknungskammer 21 wird ein Gas entfeuchtet. Die Sorptionskammer 22 dient zur Adsorption beziehungsweise Desorption eines Sorptivs aus dem Gas. In der Trocknungskammer 21 werden erfindungsgemäß hergestellte Sorbentelemente 31, die ausgebildet sind, ein Gas zu entfeuchten, angeordnet. In der Sorptionskammer 22 werden erfindungsgemäß hergestellte Sorbentelemente 32, die ausgebildet sind, ein Sorptiv aus dem Gas zu adsorbieren und später zu desorbieren, angeordnet. Die Trocknungskammer 21 und die Sorptionskammer 22 sind miteinander technisch durch diverse Leitungen, Klappen, Ventile und ähnliches, mit anderen Worten durch Verbindungselemente 4, verbunden. Nach einer Desorption wird das gesammelte Gas mittels einer Leitungsarmatur 5 zum Hauptspeicher 6 weitergeleitet.

Figur 2b zeigt eine schematische Darstellung einer Anlage zur Abtrennung von einem Gas und/oder Luftfeuchte aus einer fluiden Phase gemäß einer zweiten Ausführung der Erfindung. Ein Aufbau umfasst in diesem Fall nur eine Sorptionskammer 22 mit einem Sorbentelement 32 zur Adsorption/Desorption 32. Die Sorptionskammer 22 ist in dieser Ausführung als Hauptprozesskammer vorgesehen und dient zur Adsorption und Desorption, wobei hier keine Trocknung notwendig ist.

Welche Anlagenvariante bei dem Einsatz von erfindungsgemäß hergestellten Sorbentelementen herangezogen wird, ist von einer Zusammensetzung des Sorbentelements und einer Prozessgestaltung abhängig.

Figur 3a zeigt ein mit dem erfindungsgemäßen Verfahren hergestelltes Sorbentelement gemäß einer ersten Ausführung der Erfindung. Das Sorbentelement 7 umfasst einen Grundkörper 71 sowie einen Hohlraum 72. Im linken Teil der Figur 3a ist eine Vorderansicht des Sorbentelements 7 gezeigt. Vorliegend handelt es sich um einen kreisringförmigen Querschnitt. Der Querschnitt verläuft senkrecht zur geometrischen Ausdehnung. Demzufolge weist das Sorbentelement 7 den Hohlraum 72 auf, der zur Aufnahme eines Heizelements 8 ausgebildet ist und sich entlang der gesamten geometrischen Ausdehnung des Sorbentelements 7 erstreckt. Mit anderen Worten ist das Sorbentelement 7 vorliegend ein Hohlzylinder. Im rechten Teil von Figur 3a ist eine Seitenansicht des Sorbentelements 7 im Querschnitt abgebildet. Hier ist die geometrische Ausdehnung des Sorbentelements 7 in Form von einer Länge L erkennbar, die erfindungsgemäß zumindest 500 mm beträgt, wodurch bei üblichen Anlagendimensionen ein besonders geeigneter Einbau eines solchen Sorbentelements ermöglicht wird und keine Schüttung erfolgt.

Figur 3b zeigt das Sorbentelement aus Figur 3a mit einem Heizelement 8. Demnach liegt hier das abgeformte Sorbentelement 7 als Hohlzylinder vor, in dessen Hohlraum 72 der Heizdraht 8 angeordnet ist. Dies erfolgt vorzugsweise während des erfindungsgemäßen Verfahrens, indem der Heizdraht 8 im Weg der Koextrusion gleichzeitig zu der formgebenden Öffnung des Formwerkzeugs zugeführt wird, sodass eine Ummantelung des Heizelements 8 durch das Extrudat erfolgt.

Figur 3c zeigt unterschiedliche Vorderansichten von mit dem erfindungsgemäßen Verfahren hergestellten Sorbentelementen 7. Es bestehen aufgrund des erfindungsgemäßen Verfahrens verschiedene mögliche Querschnitte des Sorbentelementes 7 in Abhängigkeit der späteren Anwendung. Jedes der dargestellten Sorbentelemente 7 umfasst grundsätzlich einen Grundkörper 71 sowie einen Hohlraum 72. Ausgehend von dem am weitesten links dargestellten Sorbentelement 7 weisen die Sorbentelemente 7 einen Grundkörper 71 in Form eines Dreieckes, eines Quadrats, eines Rechtecks, eines Sechsecks und eines Achtecks auf. Vorliegend ist ein Profil des Hohlraums 72 kreisförmig. Der Hohlraum kann jedoch ebenfalls die für den Grundkörper 71 genannten Formen aufweisen, wobei zu beachten ist, dass der Hohlraum 72 mit dem Heizelement 8 korrespondiert, um die Anzahl von Wärmeübergängen zu reduzieren.

Figur 3d zeigt unterschiedliche Querschnitte von Heizelementen zur Ummantelung durch ein Extrudat.

Die Figuren 4a - 4c zeigen weitere mit dem erfindungsgemäßen Verfahren hergestellte Sorbentelemente 7 gemäß weiterer Ausführungen der Erfindung.

Figur 4a zeigt eine weitere bevorzugte Ausführung des Sorbentelementes 7 hergestellt unter Verwendung des entsprechenden Formwerkzeugs. Das Sorbentelement 7 umfasst einen Grundkörper 71 mit einer sternförmigen Kontur entlang eines Umfangs des Grundkörpers 71. Mit anderen Worten umfasst das Sorbentelement 7 eine Mehrzahl von Vorsprüngen 73. Vorliegend umfasst das Sorbentelement vier Vorsprünge 73 in Form von stumpfen Zacken. Sie weisen ausgehend von dem Grundkörper in radialer Richtung einen sich verjüngenden Bereich auf, der sich dann weitet. Die Vorsprünge 73 erstrecken sich entlang der gesamten geometrischen Ausdehnung, also entlang einer gesamten Länge L des Sorbentelements 7. Das Sorbentelement umfasst einen Hohlraum 72, in dem vorzugsweise ein Heizdraht 8 angeordnet werden kann. Zwischen benachbarten Vorsprüngen 73 ist ein Zwischenraum 74 angeordnet, der sich ebenfalls entlang der gesamten geometrischen Ausdehnung, also entlang der gesamten Länge L des Sorbentelements 7 erstreckt. Vorzugsweise ist die Form der Vorsprünge und demzufolge die Form der Zwischenräume 74 so ausgebildet, dass die Vorsprünge 73 eines Sorbentelements 7 und die Zwischenräume 74 eines baugleichen anderen Sorbentelements 7 miteinander korrespondieren, sodass sich die Vorsprünge 73 des einen Sorbentelements 7 in die Zwischenräume 74 des anderen Sorbentelements einführen lassen und vorzugsweise eine formschlüssige Verbindung ausbilden. Dadurch werden höhere Packungsdichten in einer Anlage erreicht.

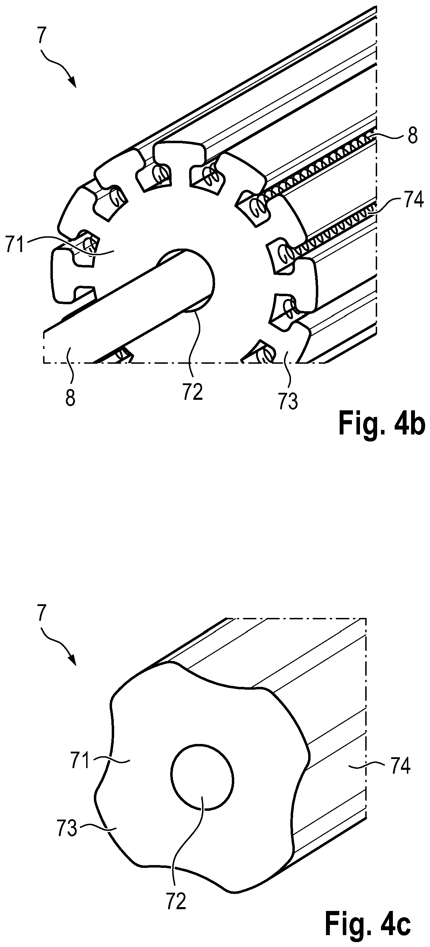

Figur 4b zeigt eine weitere mögliche Ausführung wie auch bezüglich Figur 4a beschrieben, wobei hier in den Zwischenräumen 74 zusätzliche Heizdrähte 8 angeordnet sind.

Figur 4c zeigt eine weitere Ausführung eines Sorbentelements 7. Dieses weist in den Vorsprüngen 73 keinen sich verjüngenden Bereich auf. Eine Anordnung in einer Anlage ist hierdurch vereinfach, wobei gleichzeitig bei Einsatz mehrerer baugleicher Sorbentelemente 7 dennoch hohe Packungsdichten erzielt werden.

Figur 5a zeigt ein mit dem erfindungsgemäßen Verfahren hergestelltes Sorbentelement gemäß einer zweiten Ausführung der Erfindung. Es ist eine Ausführung von einem Sorbentelement 7 mit einem Grundkörper 71 und zwei Vorsprüngen 73 mit zwei dazwischen angeordneten Zwischenräumen 74 dargestellt.

Figur 5b zeigt einen Zusammenbau einer Mehrzahl von Sorbentelementen aus Figur 5a. Es ist die strukturierte Möglichkeit der Anordnung deutlich erkennbar, sodass die Nachteile von unregelmäßigen und unkontrollierten Schüttungen von Granulat oder Pellets vermieden wird.

Figur 6a zeigt eine Sorbenteinheit 70 umfassend eine Mehrzahl von mit dem erfindungsgemäßen Verfahren hergestellten Sorbentelementen 7 in serieller elektrischer Verschaltung. Mit anderen Worten ist eine Sorbenteinheit 70 beziehungsweise ein Package 70 von sechs baugleichen Sorbentelementen 7 dargestellt. Die Sorbentelemente 7 umfassen jeweils einen Heizdraht 8 der durch gleichzeitiges Zuführen zum Formwerkzeug vom Extrudat ummantelt wurde. Jeder Heizdraht 8 umfasst zwei Heizdrahtenden. Die Heizdrahtenden der Heizdrähte 8 sind miteinander elektrisch leitend in Reihe verbunden und hierdurch sind die einzelnen Sorbentelemente 7 beziehungsweise deren Heizdrähte 8 in Reihe an einer Stromquelle 9 angeschlossen. Der Stromfluss beginnt bei einem ersten Sorbentelement 7 beziehungsweise Heizdraht 8 und fließt dann in Reihe nacheinander durch die weiteren Sorbentelemente 7 beziehungsweise deren Heizdrähte 8. Die Sorbentelemente 7 beziehungsweise deren Heizdrähte 8 sind elektrisch mit den Heizdrähten durch Löten, Schweißen oder Krimpen etc. verbunden.

Figur 6b zeigt eine Sorbenteinheit 70 umfassend eine Mehrzahl von mit dem erfindungsgemäßen Verfahren hergestellten Sorbentelementen 7 in serieller und paralleler elektrischer Verschaltung. Mit anderen Worten ist eine Sorbenteinheit 70 beziehungsweise ein Package 70 von sechs baugleichen Sorbentelementen 7 dargestellt. Die Sorbentelemente 7 umfassen jeweils einen Heizdraht 8 der durch gleichzeitiges Zuführen zum Formwerkzeug vom Extrudat ummantelt wurde. Jeder Heizdraht 8 umfasst zwei Heizdrahtenden. Die Heizdrahtenden sind miteinander elektrisch leitend verbunden, wobei wie abgebildet jeweils die Heizdrahtenden von zwei Sorbentelementen 7 miteinander verbunden sind. Hierdurch bilden diese beiden jeweils miteinander verbundenen zwei Sorbentelemente 7 beziehungsweise Heizdrähte 8 ein Paar aus. Dieses Paar sowie die anderen entsprechend ausgebildeten Paare sind jeweils über eines ihrer Heizdrahtenden an einer Stromquelle 9 angebunden. Mit anderen Worten sind gleichnamige Pole der Paare jeweils gemeinsam verbunden. Die Paare sind somit zueinander in Form einer Parallelschaltung angeordnet. Mit anderen Worten sind in Figur 6b ein unten angeordnetes Sorbentelement 7 und ein darüber angeordnetes Sorbentelement 7 miteinander elektrisch leitend verbunden und die demnach drei vorliegenden Paare von Sorbentelementen 7 sind in Parallelschaltung an die Stromquelle 9 angeschlossen. Der Stromfluss beginnt demnach gleichzeitig bei jeweils einem Sorbentelement 7 aller drei Paare von Sorbentelementen 7 und endet an dem jeweils anderen Sorbentelement 7 aller drei Paare von Sorbentelementen 7. Die Sorbentelemente 7 beziehungsweise deren Heizdrähte 8 sind elektrisch mit den Heizdrähten durch Löten, Schweißen oder Krimpen etc. verbunden.

Figur 7 zeigt ein mit dem erfindungsgemäßen Verfahren hergestelltes Sorbentelement 7 gemäß einer dritten Ausführung der Erfindung. Abgebildet sind zwei Sorbentelemente 7, die grundsätzlich auf dem gleichen Aufbau basieren. Das oben dargestellte Sorbentelement 7 umfasst einen quaderförmigen Grundkörper 71 und drei Hohlräume 72 zur Aufnahme von Heizdrähten 8. Das unten dargestellte Sorbentelement 7 umfasst einen quaderförmigen Grundkörper 71 und zwei Hohlräume 72, innerhalb derer zwei Heizdrähte 8 angeordnet sind.

Figur 8 zeigt einen Prozessraum 22 umfassend eine Mehrzahl erfindungsgemäßer Sorbenteinheiten 70. Die Sorbenteinheiten 70 sind so im Prozessraum 22 eingebaut, dass eine Stapelanordnung ausgebildet wird. Die Sorbenteinheiten werden in Abhängigkeit der Anwendung entsprechend in Betrieb genommen und in Abhängigkeit davon, wie und wann eine Trocknung, Adsorption oder Desorption erfolgen soll, verwendet, indem sie jeweils selektiv beheizt werden. Hierdurch ist es beispielsweise möglich, zunächst eine Beheizung im unteren Bereich des Prozessraums 22 durchzuführen, die dann auf einen oberen Bereich ausgeweitet wird. Dadurch ist es möglich, die Sorbenteinheiten 70 beliebig anzusteuern oder über in den Sorbenteinheiten 70 integrierte Temperatursensoren über eine Temperaturregelung oder über eine Stromstärkeregulierung die gewünschte Sorbenteinheit 70 auf die gewünschte Temperatur aufzuheizen und damit eine optimale Prozessführung zu ermöglichen. Die Sorbentelemente 7 der Sorbenteinheiten 70 sind unter anderem hohlzylinderförmig, wobei in einem Hohlraum 72 eines Sorbentelements 7 jeweils ein Heizdraht 8 angeordnet ist, der nachträglich in den Hohlraum 72 eingefügt wird oder durch Koextrusion während der Herstellung der Sorbentelemente 7 zugeführt wird. Alternativ werden eine Vielzahl jeweils mit Hohlraum 72 versehene Bestandteile eines extrudierten Sorbentelements, die durch Zerschneiden erhalten werden, auf einem Heizdraht 8 angeordnet. Mit anderen Worten liegt dann eine Sorbenteinheit 70 in Form einer kettenartigen Struktur vor. Eine Vielzahl derartiger Sorbenteinheiten 70 wird zum Beispiel schneckenartig im Prozessraum 22 angeordnet.

Figur 9 zeigt eine schematische Darstellung eines erfindungsgemäßen Verfahrens zur Herstellung eines Sorbentelements 7 zur Abtrennung von einem Gas und/oder Luftfeuchte aus einer fluiden Phase mit der in Figur 1 gezeigten Vorrichtung zur Durchführung des erfindungsgemäßen Verfahrens zur Herstellung des Sorbentelements 7.

Das Verfahren beginnt in Schritt S100 mit einem Bereitstellen eines Sorbentmaterials zur Aufnahme von einem Sorptiv aus der fluiden Phase.

Anschließend erfolgt in Schritt S200 ein Herstellen einer Mischung durch Zugabe des Sorbentmaterials und eines Bindermaterials und/oder eines Additivmaterials. Das Bereitstellen des Sorbentmaterials zur Aufnahme von dem Sorptiv aus der fluiden Phase sowie das Herstellen der Mischung durch Zugabe des Sorbentmaterials und des Bindermaterials und/oder des Additivmaterials erfolgt vorzugsweise mittels der Materialaufnahmevorrichtung 13. Entweder wird die erzeugte Mischung, die bereits sämtliche Bestandteile wie das Sorbentmaterial und das Bindermaterial und/oder das Additivmaterial umfasst, mittels der Materialaufnahmevorrichtung 13 bereitgestellt und zu dem Mischer 12 überführt oder es werden die genannten Bestandteile der Mischung nacheinander zugegeben. Im Mischer 12 erfolgt mit anderen Worten im erstgenannten Fall die Zugabe der fertigen Mischung umfassend das Sorbentmaterial und das Bindermaterial und/oder das Additivmaterialüber über die Materialaufnahmevorrichtung 13. Im zweitgenannten Fall erfolgt zunächst die Zugabe des Sorbentmaterials und anschließend des Bindermaterials und/oder des Additivmaterials über die Materialaufnahmevorrichtung 13.

In dem nachfolgenden Schritt S300 wird die Mischung aus dem Sorbentmaterial und dem Bindermaterial und/oder dem Additivmaterial mittels des Mischers 12 vorbehandelt, wobei während des Vorbehandelns eine Vermischung und Homogenisierung der Mischung erfolgt. Es erfolgt das Vorbehandeln der Mischung mittels des Mischers 12 bis die entsprechende Masse geeignet für ein Extrudieren ist. Während der Vorbehandlung werden die Komponenten gemäß den Rezepturen, die die Anteile des Sorbentmaterials, des Bindermaterials und/oder des Additivmaterials beinhalten, unter anderem vermischt. Hierbei wird die Mischung ausreichend homogenisiert.

Anschließend wird in Schritt S400 die vorbehandelte Mischung durch Herauspressen aus der formgebenden Öffnung des Formwerkzeugs 15 und Abformen der extrudierten Mischung zu einem Extrudat, wobei das Extrudat eine geometrische Ausdehnung in einer Raumrichtung von zumindest 500 mm aufweist, extrudiert. Mit anderen Worten wird, wenn die Mischung vollständig aufbereitet ist, der Prozess mit der Steuerungs- und Regelungseinheit 17 parametrisiert und der Antrieb 11 betätigt, der vorzugsweise auch durch den Mischer 12 umgesetzt wird. Dies erfolgt beispielsweise mittels eines Doppel-Schnecken-Extruders. In diesem Moment beginnt ein voll kontrolliertes Extrudieren, das heißt die Mischung wird durch die Extrusionsvorrichtung 14 und deren Formwerkzeug 15 gedrückt.

In Schritt S500 folgt ein Aufnehmen des Extrudats mittels der Aufnahmevorrichtung 16 und ein Aushärten der des Extrudats. Durch Kraftwirkung wird somit das Extrudat abgeformt und durch die Aufnahmevorrichtung 16 aufgenommen. Die Aufnahmevorrichtung 16 hält das Extrudat bis der Vorgang abgeschlossen ist. Die Form des Sorbentelementes 7 ist vom Formwerkzeug 15 beziehungsweise dessen Matrizen abhängig und wird entsprechend nach Bedarf unterschiedlich gestaltet. Im Fall, dass das Sorbentelement 7 bevorzugt in dem Schritt des Extrudierens mit einem Heizelement 8 wie einem Heizdraht hergestellt wird, wird ein nicht dargestelltes Zusatzhandling oder eine Zuführvorrichtung vorgesehen, die im Formwerkzeug 15 den Heizdraht 8 zuführen, wobei während des Extrudierens eine Ummantelung des Heizdrahts 8 mittels der extrudierten Mischung erfolgt. Im Fall, dass das Sorbentelement 7 ohne Heizdraht 8 abgeformt wurde, wird alternativ das Sorbentelement 7 in grünem Zustand beispielsweise auf gewünschte unterschiedliche Längen geschnitten und danach entsprechend weiter verarbeitet beziehungsweise konfektioniert.

Figur 10 zeigt eine schematische Darstellung der Schritte des Herstellens einer Mischung und des Vorbehandelns der Mischung, die während des erfindungsgemäßem Verfahrens aus Figur 9 erfolgen. Dabei ist Schritt S200 in Unterschritte S201 und S202 unterteilt, die sich jeweils auf die Zugabe einer Komponente beziehen. Anhand von Figur 10 werden drei unterschiedliche Zusammensetzungen beschrieben, die während des erfindungsgemäßen Verfahrens verwendet werden.

Gemäß einer ersten Variante erfolgt die Herstellung des Sorbentelements auf Basis eines Zeoliths als Sorbentmaterial. Das Zeolithmaterial ist vorzugsweise ein beliebiges kristallines Alumosilikat aus der Reihe der Zeolithstrukturen (http://www.iza-structure.org/databases/). Das anorganische Bindermaterial umfasst vorzugsweise ein Material auf Tonbasis (Kaolin, Bentonit, Attapulgit), Kieselerde oder Aluminiumoxid. In dem Mischer 12 werden in Schritt S201 50-95 % des Zeoliths mit 5-50 % des anorganischen Bindermaterials bezogen auf deren Gesamtgewicht trocken vermischt bis die Mischung homogenisiert ist. Anschließend wird in Schritt S202 unter Rühren ein Netzmittel (vorzugsweise Wasser) in einem Verhältnis von 5-40 % zum Gesamtgewicht der Mischung zugegeben. Zudem werden nach Zugabe des Netzmittels der hergestellten Mischung technische Zusatzstoffe und/oder Additive (Haftvermittler, Gleitmittel, Porenbildner) in einem Verhältnis von 0,1-5 % zugesetzt und die Mischung in Schritt S300 vorbehandelt. Das Mischen beziehungsweise Vorbehandeln wird beendet, wenn die Mischung homogen ist und die so vorbehandelte Mischung wird im nächsten Prozessschritt S400 verwendet.

Gemäß einer zweiten Variante erfolgt die Herstellung des Sorbentelements auf Basis eines chemischen Sorbentmaterials, vorzugsweise auf Basis eines Ionenaustauscherharzes. Das lonenaustauscherharz ist vorzugsweise ein funktionalisiertes Harz. Das Bindermaterial ist vorzugsweise anorganischen Ursprungs, wie zum Beispiel ein Material auf Tonbasis (Kaolin, Bentonit, Attapulgit), Kieselerde oder Aluminiumoxid, oder alternativ anorganischen Ursprungs wie zum Beispiel Kohlenhydrate oder Polyvinylalkohol, PVA. In dem Mischer 12 werden in Schritt S201 50-100 % des Ionenaustauscherharzes mit 1-50 % des Bindermaterials bezogen auf deren Gesamtgewicht vermischt bis die Mischung homogenisiert. Anschließend wird in Schritt S202 unter Rühren ein Netzmittel (vorzugsweise Wasser) in einem Verhältnis von 5-40 % zum Gesamtgewicht der Mischung zugegeben. Zudem werden nach Zugabe des Netzmittels der hergestellten Mischung technische Zusatzstoffe und/oder Additive (Haftvermittler, Gleitmittel, Porenbildner) in einem Verhältnis von 0,1-5 % zugesetzt und die Mischung in Schritt S300 vorbehandelt. Das Mischen beziehungsweise Vorbehandeln wird beendet, wenn die Mischung homogen ist und die so vorbehandelte Mischung wird im nächsten Prozessschritt S400 verwendet.

Gemäß einer dritten Variante erfolgt die Herstellung des Sorbentelements auf Basis von metallorganischen Gerüsten, MOFs, als Sorbentmaterial. Das MOF-Material ist ein MOF aus der Datenbank für metallorganische Gerüste (https://mottech.northwestern.edun). Das Bindermaterial ist vorzugsweise anorganischen Ursprungs, wie zum Beispiel ein Material auf Tonbasis (Kaolin, Bentonit, Attapulgit), Kieselerde oder Aluminiumoxid oder alternativ anorganischen Ursprungs wie zum Beispiel Kohlenhydrate, Polyvinylalkohol, PVA oder Polyvinylbutyral, PVB. In dem Mischer 12 werden in Schritt S201 50-95 % der MOF mit 5-50 % des Bindermaterials bezogen auf deren Gesamtgewicht vermischt bis die Mischung homogen ist. Anschließend wird in Schritt S202 unter Rühren ein Netzmittel (vorzugsweise Wasser) in einem Verhältnis von 5-40 % zum Gesamtgewicht der Mischung zugegeben. Zudem werden nach Zugabe des Netzmittels der hergestellten Mischung technische Zusatzstoffe und/oder Additive (Haftvermittler, Gleitmittel, Porenbildner) in einem Verhältnis von 0,1-5 % zugesetzt und die Mischung in Schritt S300 vorbehandelt. Das Mischen beziehungsweise Vorbehandeln wird beendet, wenn die Mischung homogen ist und die so vorbehandelte Mischung wird im nächsten Prozessschritt S400 verwendet.

In einem ersten Beispiel wurde ein Adsorptions-Trennverfahren in einer in Figur 11 dargestellten Versuchsanlage zur Abtrennung von einem Gas und/oder Luftfeuchte aus einer fluiden Phase durchgeführt. Die Versuchsanlage umfasst einen nicht dargestellten Strömungserzeuger zur Förderung der fluiden Phase durch die Versuchsanlage und einen Prozessraum 22 zur Trocknung der fluiden Phase und zur Abtrennung eines Gases, vorliegend Kohlenstoffdioxid, aus der im Prozessraum 22 getrockneten fluiden Phase. Dabei ist in dem Prozessraum 22 eine erfindungsgemäße Sorbenteinheit 70 angeordnet. Die Sorbenteinheit 70 umfasst eine Mehrzahl von mit dem erfindungsgemäßen Verfahren hergestellten zylinderförmigen Sorbentelementen 7. Während der erfindungsgemäßen Herstellung erfolgte unter anderem während des Extrudierens der vorbehandelten Mischung ein gleichzeitiges Zuführen eines Heizelements 8 zu der formgebenden Öffnung des Formwerkzeugs. Hierdurch werden Sorbentelemente 7 bereitgestellt, die aufgrund dieser Koextrusion eine Ummantelung des Heizelements 8 durch das Extrudat aufweisen. Bei dem Heizelement 8 handelt es sich im vorliegenden Beispiel um einen elektrisch beheizbaren Heizdraht 8. Durch das Verfahren werden auf effektive und flexible Weise Sorbentelemente 7 hergestellt, die ein besonders energieeffizientes Aufheizen des Sorbentmaterials ermöglichen, da nicht eine komplette Schüttung an Granulat oder Pellets aufgeheizt wird, sondern das Sorbentmaterial direkt mit dem leicht erhitzbaren Heizelement 8 in Kontakt steht. Ferner erfolgt die Beheizung innerhalb des Prozessraums 22 und nicht über eine äußere Wandung des Prozessraums 22 verbunden mit weiteren zusätzlichen nachteiligen Wärmeübergängen. Die Heizelemente 8 der Sorbentelemente 7 sind elektrisch parallel verschaltet.

Das Adsorptions-Trennverfahren umfasst eine erste Adsorption I, eine Desorption, einen (bitte nur kurz erwähnen, dass diese Parameter als Beispiel ausgewählt wurden, weiter auch bitte erwähnen, dass die Proben nicht vorkonditiert sind d.h. Proben sind nicht vorgetrocknet Feuchtegehalt war nicht bekannt, sondern einfach zur Messung herangezogen)) Regenerationsvorgang und eine Adsorption II. Die erste Adsorption I erfolgte mit einem Volumenstrom von 8,5 l/min, wobei das einströmende Fluid eine Kohlenstoffdioxidkonzentration von 400 ppm CO₂ in einem Trägergas umfassend Stickstoff N₂ bei einer Temperatur von 23 °C aufweist. Ferner weist das einströmende Fluid eine relative Feuchtigkeit von 69 % bei einem Druck von 1 bar auf. Die Desorption erfolgte in einem Vakuum bei 10 mbar über einen Zeitraum von 30 min bei einer Temperatur von 50 °C. Der Regenerationsvorgang erfolgte in einem Vakuum bei 10 mbar über einen Zeitraum von 60 min bei einer Temperatur von 140 °C. Die zweite Adsorption II erfolgte mit einem Volumenstrom von 8,5 l/min wobei das einströmende Fluid eine Kohlenstoffdioxidkonzentration von 400 ppm CO₂ in einem Trägergas umfassend Stickstoff N₂ bei einer Temperatur von 23 °C aufweist. Eine elektrische Stromversorgung der Heizelemente 8 erfolgte mit 20 A und 2 V DC, also einer Leistung von 40 Watt. Es ergab sich ein Gesamtstromverbrauch für die Beheizung während der Desorption und dem Regenerationsvorgang von 0,06 kWh. Diese Parameter wurden exemplarisch festgelegt und wirken in keiner Form einschränkend. Die Sorbentelemente 7 waren nicht vorkonditioniert, d. h. nicht vorgetrocknet.

Demgegenüber erfolgte ein weiteres Adsorptions-Trennverfahren, wobei dabei anstelle der erfindungsgemäßen Sorbenteinheit 70 herkömmliche ebenfalls nicht vorkonditionierte Granulate mit Beheizung über eine äußere Wandung des Prozessraums 22 eingesetzt wurden.

Die Ergebnisse des Adsorptions-Trennverfahrens gemäß dem Beispiel und des weiteren Adsorptions-Trennverfahrens gemäß dem Stand er Technik sind in Figur 12 dargestellt. Figur 12 zeigt die am Ausgang des Prozessraums 22 gemessene Kohlenstoffdioxidkonzentration c im Verhältnis zur Kohlenstoffdioxidkonzentration c₀ des einströmenden Fluids während der ersten Adsorption I und während der zweiten Adsorption I, II'. Es werden dabei Durchbruchskurven dargestellt. Der Durchbruch ist eine Kenngröße der Adsorption. Damit wird der Konzentrations-Anstieg einer ausgewählten Komponente auf der Abströmseite eines Adsorbers über eine willkürlich gewählte Größe bezeichnet. Das Durchbruchsverhalten unter verschiedenen Randbedingungen wird mithilfe von Durchbruchskurven beschrieben. Diese beschreiben den Verlauf der Konzentration eines Adsorptivs am Ausgang eines Adsorbers aufgetragen über die Zeit. Die erste Kurve AI zeigt die gemessene Kohlenstoffdioxidkonzentration gemäß dem vorliegenden Beispiel und dem Stand der Technik während der ersten Adsorption I, die zweite Kurve AII zeigt die gemessene Kohlenstoffdioxidkonzentration gemäß dem vorliegenden Beispiel während der zweiten Adsorption II und die dritte Kurve AII' zeigt die die gemessene Kohlenstoffdioxidkonzentration gemäß dem Stand der Technik während der zweiten Adsorption II'.

Dabei erfolgt grundsätzlich zunächst eine Adsorption von CO₂ an den erfindungsgemäßen Sorbentelementen bzw. dem Granulat gemäß dem Stand der Technik, sodass nahezu kein CO₂ am Ausgang des Prozessraums 22 erfasst wird. Mit fortschreitender Zeit wird kein CO₂ mehr adsorbiert, sodass ab einem gewissen Punkt ein Anstieg der gemessenen Kohlenstoffdioxidkonzentration am Ausgang des Prozessraums 22 erfolgt. Dieser Anstieg ist im Wesentlichen linear, bis sich die Kurve schließlich asymptotisch einem Grenzwert annähert, der durch die Kohlenstoffdioxidkonzentration c₀ des einströmenden Fluids gegeben ist.

Wichtiger Parameter zur Beurteilung der Effizienz ist unter anderem die Regeneration. Im vorliegenden Beispiel beträgt diese 51,8 %. Sie stellt das Verhältnis aus Aufnahmekapazität des Sorbenten während der zweiten Adsorption II zu der Aufnahmekapazität des Sorbenten während der ersten Adsorption I dar. Sie wird dadurch beeinflusst, dass während der Adsorption neben dem gewünschten Stoff, vorliegend Kohlenstoffdioxid, auch die Feuchte, also das Wasser H₂O, aus dem Fluid durch Adsorption abgetrennt wird und sich an den Grenzflächen der Sorbentelemente 7 anlagert. Demnach wird die Feuchte während des Regenerationsvorgangs durch Beheizen der Sorbentelemente 7 von den Sorbentelementen 7 getrennt, sodass bei einer nachfolgenden erneuten Adsorption die Aufnahmekapazität für Kohlenstoffdioxid wieder erhöht wird. Die Aufnahmekapazität des Sorbenten während der zweiten Adsorption II beträgt im vorliegenden Beispiel 0,0028 mmol/g. Die Aufnahmekapazität des Sorbenten während der ersten Adsorption I beträgt im vorliegenden Beispiel 0,0054 mmol/g.

Demgegenüber wurden wie beschrieben Vergleichsversuche durchgeführt mit herkömmlichen Sorbenten umfassend Granulate. Deren Beheizung erfolgt über eine Außenfläche des Prozessraums. Dabei erfolgte der Regenerationsvorgang bei deutlich höheren Temperaturen zwischen 170 °C und 200 °C und über einen längeren Zeitraum von etwa 2 Stunden. Gemäß dem Stand der Technik beträgt die Regeneration 30 - 40 % %. Sie stellt das Verhältnis aus Aufnahmekapazität des Sorbenten während der zweiten Adsorption II' zu der Aufnahmekapazität des Sorbenten während der ersten Adsorption I dar.

Es ist anhand von Figur 12 erkennbar, dass sowohl beim vorliegenden Beispiel als auch beim Stand der Technik während der zweiten Adsorption II, II' der Punkt, ab dem der Anstieg erfolgt, zeitlich früher einsetzt als während der ersten Adsorption I. Im vorliegenden Beispiel konnte das Einsetzen dieses Punktes jedoch zeitlich verzögert werden aufgrund des vorherigen Regenerationsvorgangs, sodass während der zweiten Adsorption II gemäß dem vorliegenden Beispiel mehr CO₂ adsorbiert werden kann als während der zweiten Adsorption II' gemäß dem Stand der Technik. Die Werte für die Regeneration, die beim Stand der Technik beobachtet wurden, betrugen Werte im Bereich von 30 % bis 40 %. Zudem ist beim Stand der Technik der Energieeinsatz für den Regenerationsvorgang einerseits erheblich höher, wobei andererseits dennoch geringere Werte für die Regeneration erzielt werden. Eine beispielhafte Kurve für die zweite Adsorption II' gemäß dem Stand der Technik zeigt eine Verschiebung zu geringeren Werte der Aufnahmekapazität nach dem Regenerationsvorgang.

### Bezugszeichenliste

- 11: Antrieb
- 12: Mischer
- 13: Materialaufnahmevorrichtung
- 14: Extrusionsvorrichtung
- 15: Formwerkzeug
- 16: Aufnahmevorrichtung
- 17: Steuerungs- und Regelungseinheit
- 21: Prozessraum/Trocknungskammer
- 22: Prozessraum/Sorptionskammer
- 31: Sorbentelement zur Trocknung
- 32: Sorbentelement zur Adsorption/Desorption
- 4: Verbindungselemente
- 5: Leitungsarmatur
- 6: Hauptspeicher
- 7: Sorbentelement
- 70: Sorbenteinheit
- 71: Grundkörper
- 72: Aufnahme/Hohlraum
- 73: Vorsprung
- 74: Zwischenraum
- 8: Heizelement/Heizdraht
- 9: Stromquelle
- S100: Bereitstellen eines Sorbentmaterials
- S200: Herstellen einer Mischung
- S201: Vermischen des Sorbentmaterials und des Bindermaterials
- S202: Zugeben eines Netzmittels
- S300: Vorbehandeln der Mischung
- S400: Extrudieren der vorbehandelten Mischung und Abformen der extrudierten Mischung
- S500: Aufnehmen des Extrudats und Aushärten des Extrudats
- AI: erste Adsorption/Durchbruchskurve einer ersten Adsorption
- All, All': zweite Adsorption/Durchbruchskurve einer zweiten Adsorption

## Patentansprüche

1. Verfahren zur Herstellung eines Sorbentelements (7) zur Abtrennung von einem Gas und/oder Luftfeuchte aus einer fluiden Phase, umfassend folgende Schritte:
Bereitstellen (S100) eines Sorbentmaterials zur Aufnahme eines Sorptivs aus der fluiden Phase,
Herstellen (S200) einer Mischung durch Zugabe des Sorbentmaterials und eines Bindermaterials und/oder eines Additivmaterials,
Vorbehandeln (S300) der Mischung mittels eines Mischers (12), wobei während des Vorbehandelns (S300) eine Vermischung und Homogenisierung der Mischung erfolgt,
Extrudieren (S400) der vorbehandelten Mischung durch Herauspressen aus einer formgebenden Öffnung eines Formwerkzeugs (15) und Abformen (S400) der extrudierten Mischung zu einem Extrudat, wobei das Extrudat eine geometrische Ausdehnung in einer Raumrichtung von zumindest 500 mm aufweist,
Aufnehmen (S500) des Extrudats mittels einer Aufnahmevorrichtung und Aushärten (S500) des Extrudats.

2. Verfahren nach Anspruch 1, wobei die geometrische Ausdehnung des Extrudats zumindest 1000 mm, bevorzugt 1200 mm, und besonders bevorzugt 1500 mm beträgt.

3. Verfahren nach Anspruch 1 oder 2, wobei der Mischer (12) ein Doppel-Schnecken-Extruder oder ein kontinuierlicher Kneter ist und wobei die Vermischung und Homogenisierung in dem Doppel-Schnecken-Extruder oder in dem kontinuierlichen Kneter kombiniert werden.

4. Verfahren nach einem der vorhergehenden Ansprüche, wobei die Gesamtmenge des Sorbentmaterials im Bereich von 15 bis 65 Gew.-%, bezogen auf das Gesamtgewicht der Mischung, insbesondere im Bereich von 17 bis 60 Gew.-% und vorzugsweise im Bereich von 20 bis 57 Gew.-% liegt.

5. Verfahren nach einem der vorhergehenden Ansprüche, wobei das Sorbentmaterial ein Zeolith, vorzugsweis ein kristallines Alumosilikat, ein Ionenaustauscher-Harz, Silica Gel und/oder ein metallorganisches Gerüst, MOF, umfasst.

6. Verfahren nach einem der vorhergehenden Ansprüche, wobei die Gesamtmenge des Bindermaterials im Bereich von 1 bis 30 Gew.-%, bezogen auf das Gesamtgewicht der Mischung, insbesondere im Bereich von 2 bis 25 Gew.-% und vorzugsweise im Bereich von 3 bis 20 Gew.-% liegt.

7. Verfahren nach einem der vorhergehenden Ansprüche, wobei das Bindermaterial ein Material auf Tonbasis, vorzugsweise Kaolin, Bentonit und/oder Attapulgit, ein Kohlenhydrat, Polyvinylalkohol, Polyvinylbutyral, Kieselerde und/oder Aluminiumoxid umfasst.

8. Verfahren nach einem der vorhergehenden Ansprüche, wobei das Additivmaterial einen technischen Zusatzstoff, einen Haftvermittler, ein Gleitmittel und/oder einen Porenbildner umfasst.

9. Verfahren nach einem der vorhergehenden Ansprüche, wobei ein Querschnitt der abgeformten Mischung kreisförmig, kreisringförmig, dreieckig, rechteckig, hexaederförmig oder oktaederförmig ist.

10. Verfahren nach einem der vorhergehenden Ansprüche, wobei die Öffnung des Formwerkzeugs (15) derart ausgebildet ist, dass die extrudierte Mischung eine Aufnahme (72), vorzugsweise einen Hohlraum (72), für ein Heizelement (8) umfasst.

11. Verfahren nach einem der vorhergehenden Ansprüche, wobei das Extrudieren (S400) der vorbehandelten Mischung ferner umfasst:
gleichzeitiges Zuführen eines Heizelements (8) zu der formgebenden Öffnung des Formwerkzeugs (15), sodass eine Ummantelung des Heizelements (8) durch das Extrudat erfolgt.

12. Verfahren nach einem der vorhergehenden Ansprüche, wobei die Öffnung des Formwerkzeugs (15) derart ausgebildet ist, dass das Extrudat eine Mehrzahl von entlang eines Umfangs des Extrudats angeordneten Vorsprüngen (73) umfasst, wobei zwischen benachbarten Vorsprüngen (73) ein Zwischenraum (74) zur Aufnahme (72) eines Heizelements (8) angeordnet ist.

13. Sorbentelement (7), hergestellt mit einem Verfahren nach einem der vorhergehenden Ansprüche.

14. Sorbenteinheit (70) umfassend eine Mehrzahl von Sorbentelementen (7), hergestellt mit einem Verfahren nach einem der vorhergehenden Ansprüche, wobei jedes der Mehrzahl von Sorbentelemente (7) ein elektrisches Heizelement (8) umfasst, wobei die Heizelemente der Sorbentelement (7) parallel und/oder seriell elektrisch verschaltet sind.

15. Anlage zur Abtrennung von einem Gas und/oder Luftfeuchte aus einer fluiden Phase, umfassend einen Strömungserzeuger zur Förderung der fluiden Phase durch die Anlage,
einen ersten Prozessraum (21) zur Trocknung der fluiden Phase und
einen dem ersten Prozessraum (21) in Strömungsrichtung nachgeschalteten zweiten Prozessraum (22) zur Abtrennung eines Gases, vorzugsweise Kohlenstoffdioxid, aus der im ersten Prozessraum (21) getrockneten fluiden Phase, wobei zumindest in einem der beiden Prozessräume (21, 22) ein Sorbentelement (7) nach Anspruch 13 und/oder eine Sorbenteinheit (70) nach Anspruch 14 angeordnet ist.
